# EUROPEAN PATENT APPLICATION

(11) **EP 3 421 281 A1**
(43) Date of publication of application: **02.01.2019**
(21) Application number: 17897222.0
(22) Date of filing: 13.09.2017
(51) Int. Cl.: B60K 16/00, B60K 6/10, B60L 8/00

(54) **HYBRID ENERGY SUPPLY SYSTEM AND METHOD FOR VEHICLE AND HYBRID ENERGY VEHICLE**

(30) Priority: 06.04.2017 CN 201710220844
(71) Applicant: Dong Han New Energy Automotive Technology Co., Ltd, 201801 Shanghai (CN)
(72) Inventor: MING, Qiaohong, Shanghai201801 (CN)
(74) Representative: Roman, Alexis
(86) International application number: PCT/CN2017/101479
(87) International publication number: WO 2018/184351

(57) **Abstract**

The present invention discloses an automotive hybrid energy supply system and method. The system comprises a solar cell module, a storage battery module, an input conversion module, a DC-AC inverter, a traction motor, a flywheel module, and a control module; when an automobile operates, the flywheel module provides driving power to the automobile; the control module acquires an operating state of the automobile, output parameters of the flywheel module, and SOC of the solar cell module and the storage battery module, and determines the maximum power that can be provided by the flywheel module according to the output parameters, and when the maximum power output by the flywheel module is less than the driving power required by the automobile, the input conversion module is controlled to switch the DC power output by the solar cell module and/or the storage battery module into the DC-AC inverter; and the DC-AC inverter converts the DC power into AC power to drive the traction motor. The present invention can reduce the pollution of the automobile to the environment, increase use efficiency of the energy, and increase the cruising range of the automobile.

## Description

### Technical Field

The invention relates to the field of automotive energy, in particular to an automotive hybrid energy supply system and method, and a hybrid energy automobile.

### Background Art

New energy automobiles refer to ones employing unconventional automotive fuels, combining advanced technologies of power control and driving of the automobiles, possessing advanced technical principles, new technologies, and new structures. There are four types of new energy automobiles: hybrid electric automobiles, pure electric automobiles (including solar powered automobiles), fuel cell electric automobiles, and other new energy (high-efficiency energy storage devices such as capacitors, flywheels and the like) automobiles, etc.

At present, an important factor that restricts the widespread use of electric automobiles is their short cruising range, and regenerative braking is the key to saving energy and improving the cruising range of the electric automobiles, which has significant economic and social benefits. In addition, solar energy is one of the cleanest energy. With the decreasing fossil fuels, solar energy has become an important part of the energy used by human, which has been continuously developed. The use of solar energy as a power source for automobiles will avoid pollution to the environment, as compared with traditional heat engine-driven automobiles, the solar energy can realize real zero emissions. Therefore, how to use the energy reasonably and effectively has become a problem attracting widespread attention in the field.

### Summary of the Invention

In one aspect, the present invention provides an automotive hybrid energy supply system and method to reduce the pollution of the automobile, improve the use efficiency of energy, prolong the service life of the storage battery, and increase the cruising range of the automobile.

Another aspect of the present invention provides a hybrid energy automobile to reduce the total emission of the automobile, save the energy and protect the environment, and increase the cruising range of the automobile.

To this end, the present invention provides the following technical solutions:
an automotive hybrid energy supply system comprises: a solar cell module, a storage battery module, an input conversion module, a DC-AC inverter, a traction motor, a flywheel module, and
a control module; the output end of the solar cell module and the output end of the storage battery module are connected to the DC end of the DC-AC inverter through the input conversion module, and the AC end of the DC-AC inverter is connected to the traction motor; the control module is in respective signal connection with the input conversion module and the flywheel module;
when the automobile operates, the flywheel module provides driving power to the automobile. The control module acquires the operating state of the automobile, the output parameters of the flywheel module, the SOC of the solar cell module and the storage battery module, and determines the maximum power that can be provided by the flywheel module according to the output parameters, and when the maximum power output by the flywheel module is less than the driving power required by the automobile, the input conversion module is controlled to switch the DC power output by the solar cell module and/or the storage battery module into the DC-AC inverter. The DC-AC inverter converts the DC power into AC power to drive the traction motor.

Optionally, the control module determines the maximum power that can be provided by the solar cell module and the storage battery module according to the SOC of the solar cell module and the storage battery module. When the maximum power output by the flywheel module is less than the driving power required by the automobile, if the maximum power that can be provided by the solar cell module is greater than or equal to the difference between the driving power required by the automobile and the maximum power that can be provided by the flywheel module, the input conversion module is controlled to switch the DC power output by the solar cell module into the DC-AC inverter; otherwise, the input conversion module is controlled to switch the DC power output by the solar cell module and the storage battery module into the DC-AC inverter.

Optionally, when the automobile is in a braking state or in a deceleration or downhill state, the control module preferably controls to charge the flywheel module by utilizing motor feedback power generating energy. The storage battery module is then charged by the input conversion module after the flywheel module is fully charged.

Optionally, the output end of the solar cell module is further connected to the storage battery module through the input conversion module.

Optionally, the flywheel module comprises: a flywheel, a flywheel motor, and a power electronic conversion device.

The power electronic conversion device is connected to the traction motor for inputting electric energy from the traction motor to drive the flywheel motor to drive the flywheel to rotate. When the traction motor needs energy, the energy generated by the rotation of the flywheel motor driven by the flywheel is converted into the electrical energy required by the traction motor.

Optionally, the power electronic conversion device is a bidirectional inverter.

Optionally, the system further comprises: a speed sensor and a power output shaft;
and the power output shaft is used to transmit the power output by the traction motor to driving wheels of the automobile. An output shaft of the motor is connected to the power output shaft through a transmission device, and the flywheel module is disposed on the power output shaft. The speed sensor is used for acquiring the rotation speed of the flywheel module, and transmitting the rotation speed to the control module,
and the control module determines based on the rotation speed the maximum power that can be provided by the flywheel module.

An automobile hybrid energy supply method, wherein the hybrid energy comprises: a solar cell, a storage battery, and a flywheel module. The method comprises the following steps:
when the automobile operates, the flywheel module provides driving power to the automobile;
acquiring the operating state of the automobile, the output parameters of the flywheel module, and
the SOC (State of Charge) of the solar cell and the storage battery;
determining the maximum power that can be provided by the flywheel module according to the output parameter;
if the maximum power output by the flywheel module is less than the driving power required by the automobile, the solar cell and/or the storage battery are/is controlled to provide the automobile with driving power.

Optionally, when the automobile is in a braking state or in a deceleration or downhill state, the control module preferably controls to charge the flywheel module by utilizing motor feedback power generating energy. The storage battery is then charged after the flywheel module is fully charged.

A hybrid energy automobile comprises the aforementioned automotive hybrid energy supply system.

The automotive hybrid energy supply system and method provided by the embodiments of the present invention comprehensively utilize various energy-driven automobiles, in particular, with the advantages of the flywheel energy storage elements, the driving power is provided to the automobile from the flywheel module when the automobile operates. When the maximum power output by the flywheel module is less than the driving power required by the automobile, the solar cell and/or the storage battery are/is used as energy supplements, which can effectively reduce the emission of harmful substances of the automobile and increase the cruising range of the automobile. In addition, since the flywheel energy storage elements have advantages such as high power output, high energy conversion efficiency, no overcharge and over-discharge problems and the like, not only can the high power output requirements of the automobile during startup, acceleration, and climbing be satisfied, the dynamic and economical properties of the automobile be improved, but also can the charge and discharge current of the storage battery be slowed down to extend the service life of the storage battery.

The hybrid energy automobile having this automotive hybrid energy supply system can significantly reduce the total emissions of the automobile, save energy, and increase the cruising range of the automobile.

### Brief Description of the Drawings

In order to illustrate the technical solutions in the embodiments of the present application or in the prior art more clearly, the drawings required to be used in the embodiments will be briefly described below. Obviously, the drawings in the following description are only described in the present invention. Other drawings may also be acquired by those skilled in the art based on these drawings.
FIG. 1 is a block schematic diagram of an automotive hybrid energy supply system according to the present invention;
FIG. 2 is a schematic diagram of a specific structure of the automotive hybrid energy supply system according to the present invention; and
FIG. 3 is a schematic diagram of another specific structure of the automotive hybrid energy supply system according to the present invention.

### Detailed Description of the Invention

In order to make those skilled in the art better understand the solutions of the embodiments of the present invention, the embodiments of the present invention will be further described in detail below with reference to the accompanying drawings and embodiments.

As a new type of energy storage device, flywheel has attracted people's attention for its advantages such as high efficiency, energy saving, long service life, and no environmental pollution. Compared with other energy storage technologies, as a storage battery energy storage having advantages such as high specific energy, high specific power, high efficiency, no pollution, a wide range of applications, no noise, long service life, simple maintenance, achievement of continuous work, and capability of modularized design and manufacture, the flywheel is rather suitable for applications where instantaneous high power and frequent charge and discharge are required. In addition, the use of solar energy as a power does not pollute the environment, and solar energy is also an "inexhaustible" energy.

Therefore, the present invention provides an automotive hybrid energy supply system and method. The flywheel energy storage element is used as preferred energy to provide driving force for the automobile. In addition, in consideration of the constantly changing locations of the solar cell mounted on the automobile due to the high speed of the automobile, the output power of the solar cell is unstable. Therefore, the storage battery is used as a supplementary energy source for solar energy, and a plurality of energy sources are comprehensively used to drive the automobile. Under the circumstance where the maximum power that can be provided by the flywheel energy storage element cannot satisfy the required driving power of the automobile, the insufficiency will be supplemented by the solar batteries and batteries, which will greatly reduce the emissions of harmful substances and increase the cruising range of automobiles.

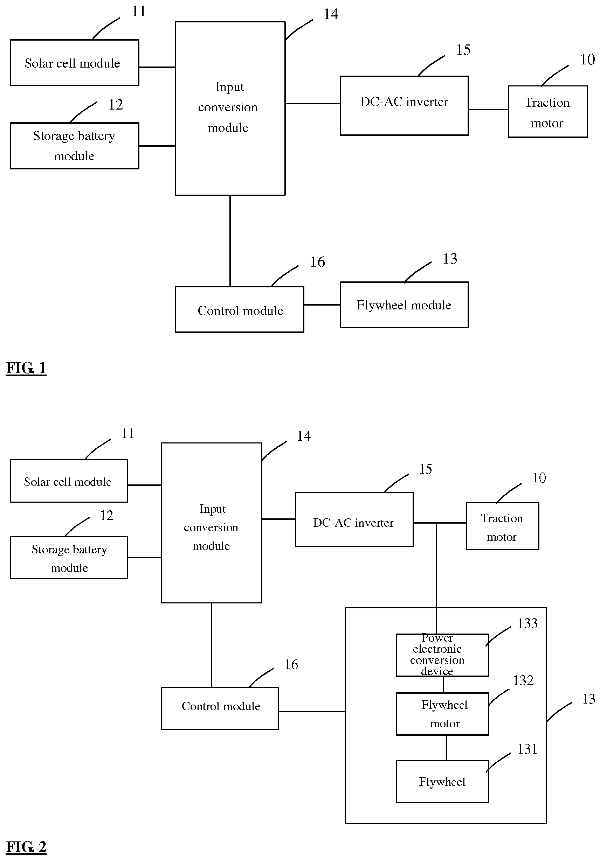

FIG. 1 is a block schematic diagram of an automotive hybrid energy supply system of the present invention.

The system comprises a solar cell module 11, a storage battery module 12, an input conversion module 14, a DC-AC inverter 15, a traction motor 10, a flywheel module 13, and a control module 16. Wherein the output end of the solar cell module 11 and the output end 12 of the storage battery module are connected to the DC end of the DC-AC inverter 15 through the input conversion module 14, and the AC end of the DC-AC inverter 15 is connected to the traction motor 10. The control module 16 is in respective signal connection with the input conversion module 14 and the flywheel module 13.

The solar cell module 11 and the storage battery module 12 described above output electrical energy to the traction motor 10, and their respective outputs are controlled by the input conversion module 14.

In practical applications, the flywheel module 13 may adopt different forms of output methods, such as outputting power to the traction motor 10 or directly outputting mechanical energy to the driving wheels of the automobile. Of course, the specific structure of the flywheel module 13 output in different forms will also be different and will be described later.

In this system, when the automobile operates, the flywheel module 13 provides the driving power to the automobile. The control module 16 acquires the operating state of the automobile, the output parameters of the flywheel module 13 (such as current, voltage, rotation speed, etc.), the solar cell module 11 and the SOC of the storage battery module 12, and determines the maximum power that can be provided by the flywheel module 13 according to the output parameters, and when the maximum power output by the flywheel module 13 is less than the driving power required by the automobile, the input conversion module 14 is controlled to switch the DC power output by the solar cell module 11 and/or the storage battery module 12 into the DC-AC inverter 15. The DC-AC inverter 15 converts the DC power into AC power to drive the traction motor 10. In this system, the control module 16 determines the maximum power that can be provided by the solar cell module 11 and the storage battery module 12 according to the solar cell module 11 and the SOC of the storage battery module 12. The solar cell module 11 and the SOC of the storage battery module 12 are all measured by the respective power management system in real time, and these information are fed back in real time to the control module 16 via the CAN bus.

When the maximum power output by the flywheel module 13 is less than the driving power required by the automobile, if the maximum power that can be provided by the solar cell module 11 is greater than or equal to the difference between the driving power required by the automobile and the maximum power that can be provided by the flywheel module 13, the control module 16 controls the input conversion module 14 to connect the DC power output from the solar cell module 11 to the DC-AC inverter 15. Otherwise, the input conversion module 14 is controlled to switch the DC power output from the solar cell module 11 and the storage battery module 12 to the DC-AC inverter 15. Of course, when the maximum power that can be provided by the storage battery module 12 is greater than or equal to the difference between the driving power required by the automobile and the maximum power that can be provided by the flywheel module 13, the control module 16 can also control the input conversion module 14 to only switch the DC power output by the storage battery module 12 into the DC-AC inverter 15, which is not limited by the embodiment of the present invention.

The automotive hybrid energy supply system provided by the embodiments of the present invention comprehensively utilizes various energy-driven automobiles, in particular, with the advantages of the flywheel energy storage elements, the driving power is provided to the automobile from the flywheel module when the automobile operates. When the maximum power output by the flywheel module is less than the driving power required by the automobile, the solar cell and/or the storage battery are/is used as energy supplements, which can effectively reduce the emission of harmful substances of the automobile and increase the cruising range of the automobile.

In addition, the automobile multi-energy supply system provided by the embodiment of the present invention can also reasonably configure the energy supply of the automobile according to the characteristics of different operating states of the automobile, and give full play to the advantages of different energy sources as much as possible. For example, when the automobile starts, accelerates and climbs, a large current is instantaneously required, and at this time, the flywheel module 13, the solar cell module 11, and the storage battery module 12 together provide drive energy. When driving at a constant speed, the solar cell module 11 and the storage battery module 12 may together provide drive energy in consideration of the need for long-term discharge, the flywheel module 13 may or may not release energy. Since the flywheel energy storage elements have advantages such as high power output, high energy conversion efficiency, no overcharge and over-discharge problems and the like, not only can the high power output requirements of the automobile during startup, acceleration, and climbing be satisfied, the dynamic and economical properties of the automobile be improved, but also can the charge and discharge current of the storage battery be slowed down to extend the service life of the storage battery.

Further, when the automobile is in a braking state or a deceleration or downhill state, the traction motor is in a regenerative braking state, and the control module 16 preferably controls to charge the flywheel module 13 by utilizing motor feedback power generating energy. The storage battery module 12 is then charged through the input conversion module 14 after the flywheel module 13 is fully charged.

It should be noted that the control module 16 needs to monitor the output parameters of the flywheel module 13 in real time during charging, and determines whether the flywheel module 13 is fully charged according to the output parameters (for example, whether the power of the flywheel module 13 is the upper limit value or whether the rotation speed of the flywheel module 13 is the maximum). If the braking time is longer, and the flywheel module 13 is still in braking when it is fully charged, the control module 16 then triggers the input conversion module 14 to turn on the input end of the storage battery module 12, so that the storage battery module 12 continues to absorb excess braking energy. After the storage battery module 12 has reached its allowable upper limit value, the mechanical braking mode is activated. Activation of the mechanical braking mode may be triggered by the control module 16 in the system of the present invention, or may also be triggered by other control modules in the automobile, or may be triggered by cooperated other control modules and the control module 16 in the system, which is not limited by the embodiment of the present invention.

In practical applications, the above battery module 12 can also be charged by an external charger. For example, when the traction motor stops operating, and the storage battery module is low in charge, it is charged by an external charging source. In addition, in another embodiment of the system of the present invention, the output end of the solar cell module 11 may also be connected to the storage battery module 12 through the input conversion module 14, so that the solar cell module 11 charges the storage battery module 12 when the set conditions are met. For example, in the environment with sufficient sunlight, the traction motor stops operating or the constant speed operating state, the excess energy of the solar cell can be supplemented to the storage battery module 12. Of course, in the case where the storage battery module 12 is connected to an external charging source, the external charging source and the solar cell module 11 may also be used to charge the storage battery module.

It should be noted that, in practical applications, the automobile operating status and the power monitoring of each energy output module may all be completed by the control module 16, or be completed by distributing these functions to different control modules of the automobile, for example, the operating status of the automobile is monitored by the entire automobile controller, the power of each energy output module is monitored by the storage battery management module. The entire automobile controller and the storage battery management module respectively communicate with the control module 16 via the CAN bus, so that the control module 16 obtains a corresponding information via the CAN bus.

The above solar cell module 11 may include: a solar cell and a solar cell voltage conversion circuit (not shown), an output end of the solar cell is connected to an input end of the solar cell voltage conversion circuit, and the output end of the solar cell voltage conversion circuit serves as an output end of the solar cell module, that is, the solar cell voltage conversion circuit is connected in series between the solar cell 11 and the output control module 14, wherein the solar cell can be provided on the top or the periphery of the automobile, which can better absorb sunlight and increase the utilization of solar energy.

The storage battery module 12 may include a storage battery and a storage battery voltage conversion circuit (not shown). An output end of the storage battery is connected to an input end of the storage battery voltage conversion circuit, and an output end of the storage battery voltage conversion circuit serves as an output end of the storage battery module, that is, the solar cell voltage conversion circuit is connected in series between the solar cell 11 and the output control module 14.

The solar cell voltage conversion circuit is a unidirectional DC-DC converter, and the storage battery voltage conversion circuit is a bidirectional DC-DC converter.

In addition, it should be noted that, in practical applications, the control module 16 can control its output power based on the SOC of the storage battery and the solar cell, for example, when its SOC is higher than 20%, the power can be fully output; when the SOC is lower than 20%, the power output is reduced by 50% of the maximum power; when the SOC is lower than 10%, the output is stopped. The specific power output control may be implemented using some existing technologies, which is not limited by the embodiment of the present invention.

As mentioned above, in practical applications, the flywheel module 13 can adopt different forms of output modes, which are illustrated below.

FIG. 2 is a schematic diagram of a specific structure of an automotive hybrid energy supply system according to the present invention.

In this embodiment, the flywheel module 11 comprises a flywheel 131, a flywheel motor 132, and a power electronic conversion device 133, wherein the power electronic conversion device 133 is connected to the traction motor 10 for inputting electric energy from the traction motor 10 to drive the flywheel motor 132 to drive the flywheel 131 to rotate. When the traction motor 10 needs energy, the energy generated by the rotation of the flywheel motor 132 driven by the flywheel 131 is converted into the electrical energy required by the traction motor 10. The power electronic conversion device 133 is a bidirectional inverter.

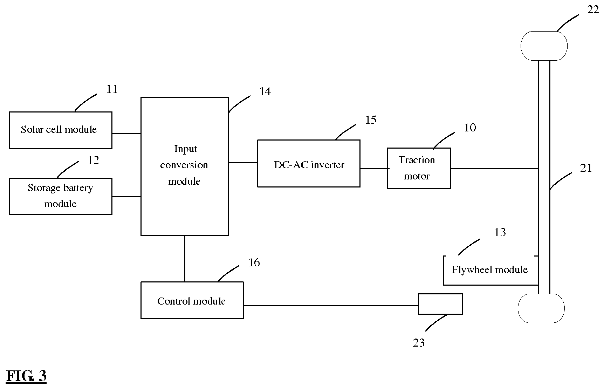

FIG. 3 is a schematic diagram of another specific structure of an automotive hybrid energy supply system according to the present invention.

In this embodiment, the system further comprises a power output shaft 21 for transmitting the power output from the traction motor 10 to the driving wheels 22 of the automobile. The flywheel module 13 is disposed on the power output shaft 21. Specifically, the output shaft of the traction motor 10 may be connected to the power output shaft 21 through a transmission device. The driving wheels 22 may be front wheels (i.e., front driving) or rear wheels (i.e., rear driving). The flywheel module 13 may be a flywheel driven to rotate by the power output shaft 21.

In addition, in this embodiment, the system further comprises a speed sensor 23 for acquiring the rotation speed of the flywheel module 13, and transmitting the rotation speed to the control module 16. Correspondingly, the control module 16 determines based on the rotation speed the maximum power that can be provided by the flywheel module 13. The speed sensor 23 may be specifically provided on the frame of the flywheel module 13.

The automotive hybrid energy supply system of the present invention applies the flywheel energy storage element to the electric automobile field, complemented with the solar energy and the storage battery, and reasonably distributes the energy output according to the operating state of the automobile, thereby effectively reducing the emission of harmful substances of the automobile, improving the cruising range of the automobile, slowing down the charge and discharge current of the storage battery, and prolonging the service life of the storage battery.

The automobile multi-energy supply system according to the embodiment of the present invention can be applied to various types of automobiles. The hybrid energy automobile having this automotive hybrid energy supply system can significantly reduce the total emissions of the automobile, save energy, and increase the cruising range of the automobile.

Correspondingly, the present invention also provides an automobile hybrid energy supply method, wherein the hybrid energy comprises: a solar cell, a storage battery, and a flywheel module. The method comprises the following steps:
when the automobile operates, the flywheel module provides driving power to the automobile;
acquiring the operating state of the automobile, the output parameters of the flywheel module, and
the SOC of the solar cell and the storage battery;
determining the maximum power that can be provided by the flywheel module according to the output parameter;
if the maximum power output by the flywheel module is less than the driving power required by the automobile, the solar cell and/or the storage battery are/is controlled to provide the automobile with driving power. For example, if the maximum power that can be provided by the solar cell is greater than or equal to the difference between the driving power required by the automobile and the maximum power that can be provided by the flywheel module, the solar cell is controlled to provide the driving power to the automobile, otherwise the solar cell and the storage battery are controlled to provide driving power to the automobile.

In addition, when the automobile is in a braking state or in a deceleration or downhill state, the control module preferably controls to charge the flywheel module by utilizing motor feedback power generating energy. The storage battery is then charged after the flywheel module is fully charged.

The automotive hybrid energy supply system provided by the embodiments of the present invention comprehensively utilizes various energy-driven automobiles, in particular, with the advantages of the flywheel energy storage elements, the driving power is provided to the automobile from the flywheel module when the automobile operates. When the maximum power output by the flywheel module is less than the driving power required by the automobile, the solar cell and/or the storage battery are/is used as energy supplements, which can effectively reduce the emission of harmful substances of the automobile and increase the cruising range of the automobile. In addition, since the flywheel energy storage elements have advantages such as high power output, high energy conversion efficiency, no overcharge and over-discharge problems and the like, not only can the high power output requirements of the automobile during startup, acceleration, and climbing be satisfied, the dynamic and economical properties of the automobile be improved, but also can the charge and discharge current of the storage battery be slowed down to extend the service life of the storage battery.

The embodiments of the present invention have been described in detail above, and preferred embodiments are used herein to describe the present invention. The above embodiments are only used to help understand the method and system of the present invention. At the same time, those skilled in the art will make changes in preferred embodiments and application ranges based on the idea of the present invention. In summary, the contents of this specification should not be construed as limiting the present invention.

## Claims

1. An automotive hybrid energy supply system, **characterized by** comprising: a solar cell module (11), a storage battery module (12), an input conversion module (14), a DC-AC inverter (15), a traction motor (10), a flywheel module (13), and a control module (16); an output end of the solar cell module (11) and an output end of the storage battery module (12) are connected to a DC end of the DC-AC inverter (15) through the input conversion module (14), and an AC end of the DC-AC inverter (15) is connected to the traction motor (10); the control module (16) is in respective signal connection with the input conversion module (14) and the flywheel module (13); when the automobile operates, the flywheel module (13) provides driving power to the automobile; the control module (16) acquires an operating state of the automobile, output parameters of the flywheel module (13), and SOC(State Of Change) of the solar cell module (11) and the storage battery module (12), and determines the maximum power that can be provided by the flywheel module (13) according to the output parameters, and when the maximum power output by the flywheel module (13) is less than the driving power required by the automobile, the input conversion module (14) is controlled to switch DC power output by the solar cell module (11) and/or the storage battery module (12) into the DC-AC inverter (15); the DC-AC inverter (15) converts the DC power into AC power to drive the traction motor (10).

2. The system according to claim 1, **characterized in that** the control module (16) determines the maximum power that can be provided by the solar cell module (11) and the storage battery module (12) according to the solar cell module (11) and the SOC of the storage battery module (12), and when the maximum power output by the flywheel module (13) is less than the driving power required by the automobile, if the maximum power that can be provided by the solar cell module (11) is greater than or equal to a difference between the driving power required by the automobile and the maximum power that can be provided by the flywheel module (13), the input conversion module (14) is controlled to switch the DC power output by the solar cell module (11) into the DC-AC inverter (15); otherwise, the input conversion module (14) is controlled to switch the DC power output by the solar cell module (11) and the storage battery module (12) into the DC-AC inverter (15).

3. The system according to claim 2, **characterized in that** when the automobile is in a braking state or in a deceleration or downhill state, the control module (16) preferably controls to charge the flywheel module (13) by utilizing motor feedback power generating energy, and the storage battery module (12) is then charged by the input conversion module (14) after the flywheel module (13) is fully charged.

4. The system according to claim 3, **characterized in that** the output end of the solar cell module (11) is further connected to the storage battery module (12) through the input conversion module (14).

5. The system according to any one of claims 1 to 4, **characterized in that** the flywheel module (13) comprises: a flywheel (131), a flywheel motor (132), and a power electronic conversion device (133);
the power electronic conversion device (133) is connected to the traction motor (10) for inputting electric energy from the traction motor (10) to drive the flywheel motor (132) to drive the flywheel (131) to rotate; and when the traction motor (10) needs energy, the energy generated by the rotation of the flywheel motor (132) driven by the flywheel (131) is converted into the electrical energy required by the traction motor (10).

6. The system according to claim 5, **characterized in that** the power electronic conversion device (133) is a bidirectional inverter.

7. The system according to any one of claims 1 to 4, **characterized in that** the system further comprises: a speed sensor and a power output shaft;
the power output shaft is used to transmit the power output by the traction motor (10) to driving wheels of the automobile; an output shaft of the motor is connected to the power output shaft through a transmission device, and the flywheel module (13) is disposed on the power output shaft;
the speed sensor is used for acquiring a rotation speed of the flywheel module (13), and transmitting the rotation speed to the control module (16); and
the control module (16) determines the maximum power that can be provided by the flywheel module (13) based on the rotation speed.

8. A method for supplying hybrid energy for an automobile, **characterized in that** the hybrid energy comprises: a solar cell, a storage battery, and a flywheel module (13); the method comprises:
when the automobile operates, the flywheel module (13) provides driving power to the automobile;
acquiring an operating state of the automobile, output parameters of the flywheel module (13), and
SOC of the solar cell and the storage battery;
determining the maximum power that can be provided by the flywheel module (13) according to the output parameters;
if the maximum power output by the flywheel module (13) is less than the driving power required by the automobile, the solar cell and/or the storage battery are/is controlled to provide the automobile with driving power.

9. The method according to claim 8, **characterized in that**,
when the automobile is in a braking state or in a deceleration or downhill state, the flywheel module (13) is preferably charged by utilizing motor feedback power generating energy, and the storage battery is then charged after the flywheel module (13) is fully charged.

10. A hybrid energy automobile, **characterized by** comprising the automotive hybrid energy supply system according to any one of claims 1 to 7.
